(19) Europäisches Patentamt / European Patent Office / Office européen des brevets

(11) **EP 2 444 823 B1**

(12) **FASCICULE DE BREVET EUROPEEN**

(45) Date de publication et mention
de la délivrance du brevet:
**12.02.2020 Bulletin 2020/07**

(21) Numéro de dépôt: **11184653.1**

(22) Date de dépôt: **11.10.2011**

(51) Int Cl.:
*G01S 19/46* (2010.01)     *G01S 5/02* (2010.01)
*G01S 19/17* (2010.01)

(54) **Procédé et système de géo-localisation d'une radio-balise dans un système d'alerte**

Verfahren und System zur Geolokalisierung einer Funkbake in einem Warnsystem

Method and system for geopositioning of a radio beacon in a warning system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2010 FR 1004157**

(43) Date de publication de la demande:
**25.04.2012 Bulletin 2012/17**

(73) Titulaire: **THALES**
**92400 Courbevoie (FR)**

(72) Inventeurs:
• **Calmettes, Thibaud**
**31400 Toulouse (FR)**
• **Monnerat, Michel**
**31240 Saint Jean (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
EP-A2- 0 860 709     WO-A1-01/04657
WO-A1-2009/035201     US-B1- 6 289 280

• RICHARD PAIEMENT ET AL: "Dilution of Precision Factor in Medium Earth Orbit Search and Rescue Systems", PROC. OF ION GNSS 2008, vol. 2705, 16 septembre 2008 (2008-09-16), page 2700, XP55011473, Savannah, Ca, USA
• C. FERNÁNDEZ PRADES: "Advanced Signal Processing Techniques in Local User Terminals for Search & Rescue Systems Based on MEO Satellites", PROCEEDINGS OF ION-GNSS 2005, 13 septembre 2005 (2005-09-13), pages 579-585, XP055004019,

**Description**

La présente invention concerne un procédé et un système de géo localisation d'une radio-balise par exploitation des informations transmises au sein d'un système d'alerte associé à cette balise.

Un système d'alerte, encore appelé système de recherche et sauvetage connu sous l'acronyme anglo saxon SAR « Search And Rescue », est composé d'une ou plusieurs constellations de satellites qui reçoivent sur une voie montante un signal d'alerte provenant d'une radio-balise. Ce signal est émis sur une fréquence de détresse internationale. Le signal d'alerte est retransmis à une station au sol chargée d'en extraire les informations de détresse qui sont ensuite dirigées vers un centre de contrôle de mission.

Un système d'alerte SAR connu est le système mondial Cospas-Sarsat qui a pour application principale la détection de sinistres pour des bateaux, avions ou individus. Le système Cospas-Sarsat utilise notamment une constellation de satellites à orbite basse appelée LEOSAR (« Low-Earth Orbit Search and Rescue ») pour la réception et le transfert vers la station sol des messages d'alerte.

Un système d'alerte a également pour objectif de localiser la radio-balise émettrice du message de détresse. A cet effet, l'utilisation de satellites à orbite basse permet d'effectuer une localisation par effet Doppler-Fizeau. Un unique satellite exploite l'information de fréquence d'arrivée du message d'alerte à plusieurs instants successifs datés au cours de son déplacement. La fréquence du signal reçu étant différente à chaque fois, il est ainsi possible d'en déduire la position de la radio-balise.

Cependant, la localisation par effet Doppler-Fizeau présente l'inconvénient majeur d'un temps de localisation long puisqu'un seul satellite doit effectuer plusieurs mesures successives au cours de son déplacement avant de pouvoir en déduire la position de la radio-balise. De plus les mesures fréquentielles ne présentent pas une précision suffisante pour des applications nécessitant un positionnement très précis. Enfin, pour disposer d'une vitesse relative suffisante, la mesure Doppler-Fizeau est principalement exploitable pour des satellites en orbite basse, ce qui présente certains inconvénients: la durée de vie des satellites est plus faible et le taux de couverture pour des constellations de taille réduite est également faible (typiquement de l'ordre de 35% pour 6 satellites).

Une évolution du système Cospas-Sarsat consiste à utiliser une nouvelle constellation de satellites dite MEOSAR (« Medium-Earth Orbit Search and Rescue ») à orbite plus élevée. Ces satellites sont positionnés sur une orbite principalement utilisée par des satellites de géo-localisation GNSS (« Global Navigation Satellite System ») tels les satellites des systèmes GPS ou GALILEO. Cette orbite est connue sous l'appellation MEO (« Medium-Earth Orbit ») et correspond à une région de l'espace comprise entre 2000 km et 35000 km. Ainsi, il est possible, sur un même satellite de bénéficier des fonctions d'alerte SAR et de géo-localisation GNSS. Cette possibilité est prévue dans la première génération de satellites GALILEO et pour la troisième génération de satellites GPS, dans les années à venir.

Par exemple, Richard Paiement ET AL: "Dilution of Précision Factor in Medium Earth Orbit Search and Rescue Systems" concerne les systèmes SAR, plus particulièrement les satellites relais sur orbite moyenne (MEO), et divulgue trois techniques de géolocalisation de la balise émettrice (TDOA, FDOA et méthode conjointe).

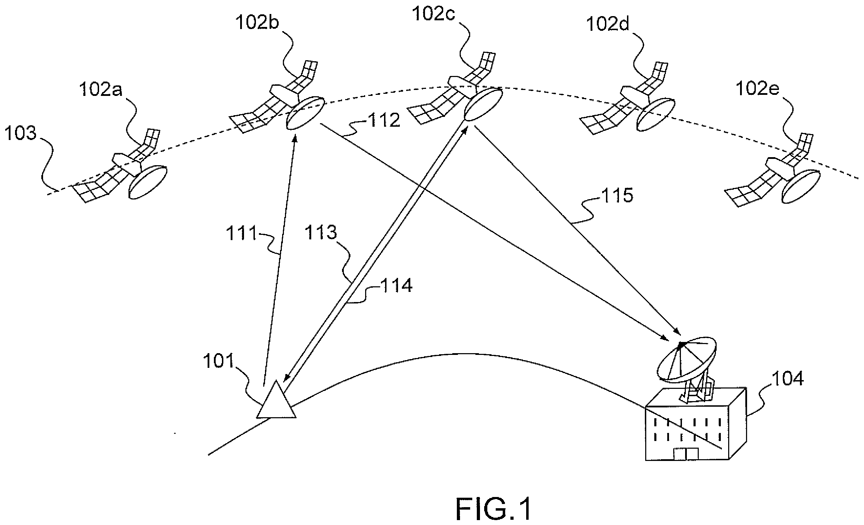

La figure 1 schématise un tel système pour le cas d'application de satellites GALILEO. Une radio-balise 101 communique avec une constellation de satellites 102a, 102b, 102c, 102d, 102e SAR. Au moins un de ces satellites 102c est aussi un satellite de géo-localisation GNSS. Certains de ces satellites peuvent également ne posséder que la fonctionnalité de géo-localisation. La radio-balise 101 transmet ses informations de détresse dans un message d'alerte via une voie montante 111,114 à destination d'un satellite SAR 102b, 102c. Le message d'alerte est ensuite retransmis à une station au sol 104 via une voie descendante 112,115. Le positionnement de la radio-balise 101 se fait principalement par l'utilisation d'un récepteur GNSS dans la balise, la position ainsi calculée étant retransmise par la voie montante entre la balise et le satellite. Ce récepteur reçoit un signal de positionnement provenant d'au moins quatre satellites GNSS en visibilité et peut en déduire sa position par des moyens connus. La position est ensuite transmise sur la voie montante 111,115 avec le message de détresse et parvient à la station sol 104 qui peut ensuite communiquer la position de la balise à un centre de contrôle. Un intérêt de l'utilisation de satellites à orbite moyenne est qu'en permanence au moins un de ces satellites est visible du sol ce qui permet d'assurer un acquittement de la réception du message d'alerte par la station sol.

Cependant, l'utilisation d'un récepteur de positionnement embarqué dans la radio-balise présente des inconvénients liés à la complexité des traitements à effectuer pour la localisation et la consommation de la balise. En particulier, pour se localiser, le récepteur GNSS doit au préalable effectuer une recherche d'au moins quatre satellites de géo-localisation en visibilité. A titre d'exemple, le décodage d'un signal GPS peut prendre entre 30 secondes et 1 minute pour le calcul d'un premier point. L'autonomie de la balise est directement impactée par ce temps de traitement non négligeable.

La présente invention a notamment pour objectif de réduire la complexité et la consommation d'une radio-balise en exploitant les fonctionnalités du système d'alerte pour déterminer directement le positionnement sans utiliser de récepteur GNSS ou en en limitant son utilisation. Un des objectifs de l'invention est également de réduire le temps d'accrochage préalable à la détermination du positionnement. L'utilisation conjointe du système d'alerte SAR et du système de positionnement par satellite GNSS est envisagée afin d'exploiter de façon optimale toutes les ressources disponibles.

L'invention a pour objet un procédé de géo-localisation d'un dispositif transmettant un signal contenant au moins un message à destination d'une pluralité de satellites relais sur orbite terrestre moyenne, en visibilité dudit dispositif, recevant ledit message et le transmettant à des moyens de traitement, caractérisé en ce qu'il comporte au moins les étapes suivantes :

○ la détermination des instants de réception $T_{Ri}$ dudit message par lesdits satellites relais,

○ la détermination des pseudo-distances $D_i$ entre ledit dispositif et lesdits satellites relais par résolution du système d'équations $T_{Ri} = D_i/c + T_e$, avec c la vitesse de propagation du signal transmis, $T_e$ l'instant d'émission du message par le dispositif et i variant de 1 au nombre $N_{vis}$ de satellites relais en visibilité, dans lequel $T_e$, ou alternativement l'incertitude temporelle entre $T_e$ et les temps de réception $T_{Ri}$, est inconnu,

○ une étape de recherche et d'acquisition, par des moyens de réception que comporte ledit dispositif, d'un nombre N de signaux de radionavigation par satellite, N étant au moins égal à $2+m-N_{vis}$ où m est le nombre de coordonnées spatiales dudit dispositif et $N_{vis}$ le nombre de satellites relais en visibilité du dispositif,

○ la détermination des décalages temporels entre l'émission desdits signaux de radionavigation et leur réception par ledit dispositif,

○ la diffusion par ledit dispositif de ces décalages temporels dans ledit message,

○ la détermination de la position dudit dispositif à partir au moins desdites pseudo-distances $D_i$, des coordonnées de positionnement desdits satellites relais, et par résolution supplémentaire des équations suivantes, $T_{Rj}$ (GNSS) = $D_j$(GNSS)/c + $T_{ej}$(GNSS), où $TR_j$(GNSS) est l'instant de réception, par la balise, du signal de radio-navigation émis par le satellite GNSS j, $T_{ej}$ (GNSS) est son instant d'émission et $D_j$(GNSS) est la pseudo- distance entre la balise et le satellite GNSS j.

Dans une variante de réalisation de l'invention, les satellites relais font partie de la constellation d'un système d'alerte et sauvetage SAR.

Dans une variante de réalisation de l'invention, ledit signal est un signal de détresse contenant un message d'alerte,

Dans une variante de réalisation de l'invention, l'étape de recherche et d'acquisition de signaux de radionavigation par satellite est déclenchée lorsque le nombre $N_{vis}$ de satellites relais en visibilité est strictement inférieur à 1+m.

Dans une variante de réalisation de l'invention, l'instant d'émission $T_e$ dudit message est mesuré par ledit dispositif et transmis dans le message à destination desdits satellites relais qui le transmettent à leur tour audits moyens de traitement, le nombre minimum N de signaux de radionavigation recherchés étant alors diminué de un lorsque le nombre $N_{vis}$ de satellites relais en visibilité dudit dispositif est strictement inférieur à 1+m.

Dans une variante de réalisation de l'invention, le procédé comporte en outre des mesures de la fréquence de réception dudit signal émis par ledit dispositif à destination desdits satellites relais, la détermination de la position dudit dispositif étant effectuée en outre à partir de ces mesures et de la fréquence d'émission dudit signal.

Dans une variante de réalisation de l'invention, les informations de position du dispositif sont transmises avec le message vers les satellites relais puis vers lesdits moyens de traitement.

Dans une variante de réalisation de l'invention, les coordonnées de positionnement des satellites relais et/ou des satellites de radionavigation sont déterminées à partir des éphémérides de ces satellites.

L'invention a également pour objet un système pour la géo-localisation d'un dispositif caractérisé en ce qu'il comporte un dispositif apte à transmettre un message, une pluralité de satellites relais sur orbite terrestre moyenne aptes à recevoir ledit message et à le diffuser et des moyens de traitement aptes à déterminer la position dudit dispositif, ledit système étant adapté à mettre en œuvre le procédé selon l'invention.

Dans une variante de réalisation de l'invention, les satellites relais font partie de la constellation d'un système d'alerte et sauvetage SAR.

Dans une variante de réalisation de l'invention, lesdits moyens de traitement sont situés à distance desdits satellites relais ou sont embarqués dans lesdits satellites relais.

Dans une variante de réalisation de l'invention, lesdits satellites relais comportent en outre des moyens de transmission d'un signal de radionavigation.

Dans une variante de réalisation de l'invention, ledit dispositif est une radio-balise et ledit signal est un signal de détresse contenant un message d'alerte, les dits moyens de traitement transmettant ledit message d'alerte à un centre de contrôle.

D'autres caractéristiques et avantages de l'invention apparaîtront à l'aide de la description qui suit faite en regard de dessins annexés qui représentent :

La figure 1, un schéma d'un système d'alerte avec une constellation de satellites à orbite MEO,

La figure 2, un synoptique du système de géo-localisation selon l'invention.

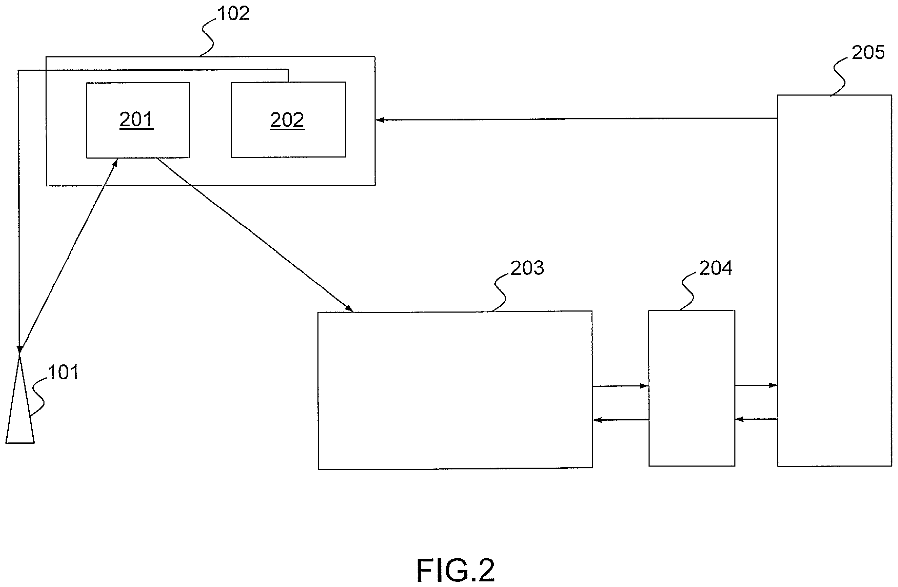

La figure 2 représente un synoptique du système de géo-localisation d'une radio-balise selon l'invention. Une balise 101 comporte des moyens de création et d'émission d'un signal d'alerte contenant des informations de détresse. Elle comporte en outre des moyens de réception d'un signal de radio-navigation, par exemple un signal émis par un satellite GNSS. La radio-balise 101 communique avec au moins un satellite 102 relais qui comporte des premiers moyens 201 de réception du signal d'alerte et de transmission dudit signal à une station sol 203. Le satellite 102 relais comporte en outre des seconds moyens 202 de radio-navigation permettant d'émettre un signal de type GNSS vers la balise 101 au sol. Les moyens de réception 201 et de radio-navigation 202 peuvent être situés dans deux satellites différents. Une station sol 203 réceptionne les messages contenus dans le signal d'alerte et les transmet à un centre de contrôle non représenté. Un dispositif de programmation 204 permet de générer un acquittement à destination de la balise 101. Une télécommande 205 est chargée du pilotage des satellites.

Dans la suite de la description, un satellite relais indiquera un satellite comportant des moyens 201 de réception d'un signal d'alerte, par exemple un satellite compatible du système SAR.

Un des avantages de l'utilisation de satellites sur orbite MEO est qu'à tout instant, plusieurs satellites sont susceptibles d'être en visibilité en même temps depuis un point au sol. Au contraire, pour un système d'alerte utilisant une constellation sur orbite proche (LEO), le plus souvent, un seul satellite est en visibilité ce qui conduit à mettre en œuvre un procédé de géo-localisation à partir uniquement de l'information de Doppler dû au déplacement de cet unique satellite.

Comme indiqué précédemment, lorsqu'un sinistre se produit, la radio-balise 101 émet un signal d'alerte sur une fréquence de détresse vers tous les satellites en visibilité qui comportent des moyens 201 de réception d'un tel signal. Le signal d'alerte est émis en diffusion ou « broadcast », c'est-à-dire qu'il est diffusé à tous les satellites en écoute sur la fréquence de détresse. Un intérêt de la diffusion est qu'elle ne nécessite pas de mécanisme de recherche préalable pour déterminer quels satellites sont en visibilité de la balise. Lorsque le message d'alerte est reçu par un satellite i, celui-ci possède la capacité de le dater avec un instant de réception $T_{Ri}$ selon son horloge interne. A partir de cette information, il est possible de déterminer une relation qui lie le temps d'émission $T_e$ du message d'alerte par la radio-balise à l'instant de réception $T_{Ri}$ du message par le satellite et à la distance $D_i$ entre la balise et le satellite :

$$T_{Ri} = D_i/c + T_e \ (1)$$

avec c la vitesse de propagation du signal transmis et i variant de 1 au nombre de satellites en visibilité. Comme les instants $T_{Ri}$ et $T_e$ ne sont pas mesurés avec la même horloge et que des asynchronismes peuvent exister entre l'horloge de la radio-balise et celle des satellites, on parle de pseudo-distance $D_i$ et non de distance réelle qui est obtenue après estimation du décalage temporel entre les deux horloges.

La position du satellite est connue de lui ou de la station sol 203. La relation (1) comporte quatre inconnues, les trois coordonnées dans l'espace de la balise 101 et le temps d'émission $T_e$ du message d'alerte. Ainsi, si quatre satellites au moins sont en visibilité de la balise, il est possible de résoudre le système d'équations obtenu afin d'en déduire le positionnement exact de la balise.

Dans le cas où un positionnement de la radio-balise uniquement en deux dimensions est visé, alors la relation (1) ne comporte que trois inconnues et seuls trois satellites en visibilité sont nécessaires. De façon générale, le nombre de satellites nécessaires est égal au nombre d'inconnues que comporte la relation (1). Si m est le nombre de coordonnées de la radio-balise, le nombre de satellites en visibilité nécessaires pour déduire le positionnement de la radio-balise sera égal à 1 + m.

Dans une variante de réalisation de l'invention, la radio-balise peut également inclure le temps d'émission $T_e$ dans le message d'alerte transmis. Dans ce cas, la quatrième inconnue à lever correspond à l'incertitude temporelle entre $T_e$ et les temps de réception $T_{Ri}$ due aux asynchronismes des horloges des satellites avec l'horloge de la balise.

Ainsi, en appliquant l'invention avec quatre satellites visibles comportant uniquement des moyens de réception d'un message d'alerte, il est possible de s'affranchir totalement de l'utilisation d'un récepteur GNSS dans la radio-balise ce qui engendre un gain manifeste en complexité, autonomie et temps de traitement.

Les mesures de temps de réception sont effectuées à bord des satellites et retransmises, avec les messages d'alerte et éventuellement les positions des satellites à la station sol qui est chargée d'exécuter les traitements nécessaires pour résoudre le système d'équations à quatre inconnues permettant d'obtenir le positionnement de la balise 101. A cet effet la station sol 203 constitue des moyens de traitements des informations reçues. Alternativement, la résolution du système peut également être effectuée par la charge utile à bord du satellite qui retransmet alors à la station sol directement les informations de positionnement de la balise.

Dans une variante de réalisation de l'invention, les mesures de temps de réception peuvent être remplacées, en tout ou partie, par des mesures de fréquence Doppler. La vitesse de déplacement d'un satellite sur orbite moyenne MEO étant plus réduite que celle d'un satellite sur orbite basse LEO, la précision associée à ces mesures Doppler est cependant moindre.

Dans la pratique, en particulier en environnement urbain où les obstacles sont nombreux, le nombre de satellites en visibilité peut être inférieur à quatre. Dans le cas où au plus trois satellites relais sont en visibilité, la présente invention permet de compléter les mesures nécessaires à la géo-localisation de la balise par des mesures complémentaires effectuées sur le signal de radio-navigation reçu par la balise.

Il est connu qu'un récepteur de signal de radio-navigation exploite les mesures effectuées sur les signaux provenant d'au moins quatre satellites pour déterminer les informations relatives à son positionnement. Pour chaque satellite, l'instant de réception du signal par la balise est lié à l'instant d'émission du signal par le satellite et à la distance entre le satellite et le récepteur. Les coordonnées spatiales du satellite sont transmises dans le signal qui doit donc être démodulé entièrement par le récepteur.

Dans le cas de l'invention, les positions des satellites sont connues de la station au sol 203, soit par transmission directe de cette information avec le message d'alerte pour les satellites exécutant cette fonctionnalité, soit par l'intermédiaire d'éphémérides. Le signal de radio-navigation reçu par la balise ne nécessite donc pas une démodulation complète mais uniquement une estimation de la différence entre l'instant d'émission par le satellite et l'instant de réception par la balise. Cette estimation est calculée à partir de la détection et la datation d'un pic de corrélation dans le signal reçu. A titre d'exemple, dans un signal GALILEO, ce pic de corrélation, encore appelé « pilot tone », apparait toutes les 4 ms. La datation du pic de corrélation permet d'obtenir une information sur le décalage temporel entre le temps d'émission par le satellite GNSS et le temps de réception par la balise. Une ambigüité temporelle subsiste du fait que les horloges des satellites et de la balise ne sont pas synchrones. Il n'est pas nécessaire de lever cette ambigüité puisque l'inconnue $T_e$ est alors déterminée directement dans le référentiel temporel de l'horloge du satellite. Cette information est ensuite transmise avec le message d'alerte au satellite relais 102 puis à la station sol 203 et permet en combinaison avec les mesures effectuées sur le temps de réception du message d'alerte par le satellite de déterminer le positionnement de la balise.

Le système d'équations (1) est alors complété avec les équations suivantes :

$$T_{Rj} \, (GNSS) = D_j(GNSS)/c + T_{ej}(GNSS) \, (2)$$

Où $T_{Rj}$ (GNSS) est l'instant de réception, par la balise, du signal de radio-navigation émis par le satellite GNSS d'indice j, $T_{ej}$ (GNSS) est son instant d'émission et $D_j$(GNSS) est la pseudo-distance entre la balise et le satellite GNSS j.

Dans une variante de réalisation de l'invention, une tranche entière de signal de radionavigation de durée suffisante pour mesurer un pic de corrélation peut être transmise par la radio-balise sur la voie montante à destination finale de la station sol qui sera chargée d'effectuer les mesures. Cette variante constitue une solution plus simple à mettre en œuvre pour la balise, mais est cependant beaucoup plus coûteuse en volume de données retransmises sur la voie montante ce qui peut être contraignant du point de vue de la bande passante disponible sur la voie montante.

En pratique, le système comporte cinq inconnues que sont les trois coordonnées dans l'espace de la balise, l'instant d'émission du message d'alerte et l'ambigüité temporelle sur la datation du pic de corrélation du signal de radionavigation. Dans ce cas, l'invention peut être mise en oeuvre dans les configurations suivantes : trois satellites relais et deux satellites de radionavigation ou deux satellites relais et trois satellites de radionavigation. Si un seul satellite relais est en visibilité, alors la radiobalise devra effectuer une recherche de quatre satellites de radionavigation, comme dans un système GNSS classique, mais elle n'aura pas besoin de démoduler intégralement les signaux pour obtenir les positions exactes des satellites comme mentionné précédemment.

Dans une variante de réalisation de l'invention, l'instant d'émission du message d'alerte peut être transmis par la balise, conjointement audit message, dans une unité correspondant à son horloge interne. Le système comporte alors uniquement quatre inconnues. L'invention peut alors être mise en œuvre dans les configurations suivantes : trois satellites relais et un satellite de radionavigation ou deux satellites relais et deux satellites de radionavigation ou encore un satellite relais et trois satellites de radionavigation.

De façon plus générale, si N est le nombre de satellites relais en visibilité de la radio-balise, celle-ci doit effectuer au minimum un nombre de 5-N recherches de signaux de radio-navigation dans le cas où l'instant d'émission du message d'alerte n'est pas transmis et un nombre de 4-N recherches dans le cas contraire.

Le mode de réalisation de l'invention précédemment décrit s'appuie sur l'exemple d'un système d'alerte de type SAR. Sans sortir du cadre de l'invention, celle-ci s'applique également à tout système de collecte de données par satellite pour lequel des données sont diffusées depuis une radio-balise vers des moyens de réception situés à bord d'un satellite et retransmis vers une station sol. De plus l'invention s'applique de façon identique à tout dispositif équivalent à une radio-balise, qui comporte d'une part des moyens de génération, de datation et de transmission d'un message vers un satellite et d'autre part des moyens de réception et de traitement d'un signal de radio-navigation en provenance d'un satellite.

En résumé, le procédé et le système selon l'invention ont pour avantage de diminuer la complexité des traitements effectués par la radio-balise en vue de son positionnement et également de diminuer le temps de traitement nécessaire avant la détermination d'un premier point de mesure.

L'invention exploite les propriétés conjointes d'un système d'alerte et d'un système de radio-navigation, les satellites des deux systèmes étant situés sur la même orbite terrestre moyenne qui permet une visibilité d'un nombre suffisant de satellites depuis un point de la terre pour déterminer une information de positionnement par calcul de pseudo-distances.

## Revendications

1. Procédé de géo-localisation d'un dispositif (101) transmettant un signal contenant au moins un message à destination d'une pluralité de satellites relais (102a,102b,102c,102d,102e) sur orbite terrestre moyenne (MEO), en visibilité dudit dispositif, recevant ledit message et le transmettant à des moyens de traitement (203), **caractérisé en ce qu'**il comporte au moins les étapes suivantes :

   o la détermination des instants de réception $T_{Ri}$ dudit message par lesdits satellites relais,

   o la détermination des pseudo-distances $D_i$ entre ledit dispositif (101) et lesdits satellites relais par résolution du système d'équations $T_{Ri} = D_i/c + T_e$, avec c la vitesse de propagation du signal transmis, $T_e$ l'instant d'émission du message par le dispositif (101) et i variant de 1 au nombre $N_{vis}$ de satellites relais en visibilité, dans lequel $T_e$, ou alternativement l'incertitude temporelle entre $T_e$ et les temps de réception $T_{Ri}$, est inconnu,

   ∘ une étape de recherche et d'acquisition, par des moyens de réception que comporte ledit dispositif (101), d'un nombre N de signaux de radionavigation par satellite, N étant au moins égal à $2+m-N_{vis}$ où m est le nombre de coordonnées spatiales dudit dispositif (101) et $N_{vis}$ le nombre de satellites relais en visibilité du dispositif (101),

   ∘ la détermination des décalages temporels entre l'émission desdits signaux de radionavigation et leur réception par ledit dispositif (101),

   ∘ la diffusion par ledit dispositif (101) de ces décalages temporels dans ledit message,

   o la détermination de la position dudit dispositif (101) à partir au moins desdites pseudo-distances $D_i$, des coordonnées de positionnement desdits satellites relais et par résolution supplémentaire des équations suivantes, $T_{Rj}(GNSS) = D_j(GNSS)/c + T_{ej}(GNSS)$, où $T_{Rj}$ (GNSS) est l'instant de réception, par la balise, du signal de radio-navigation émis par le satellite GNSS j, $T_{ej}$ (GNSS) est son instant d'émission et $D_j(GNSS)$ est la pseudo-distance entre la balise et le satellite GNSS j.

2. Procédé de géo-localisation selon la revendication 1 **caractérisé en ce que** les satellites relais (102a,102b,102c,102d,102e) font partie de la constellation d'un système d'alerte et sauvetage SAR.

3. Procédé de géo-localisation selon l'une des revendications 1 ou 2 **caractérisé en ce que** ledit signal est un signal de détresse contenant un message d'alerte,

4. Procédé de géo-localisation selon l'une des revendications précédentes **caractérisé en ce que** l'étape de recherche et d'acquisition de signaux de radionavigation par satellite est déclenchée lorsque le nombre $N_{vis}$ de satellites relais en visibilité est strictement inférieur à $1+m$.

5. Procédé de géo-localisation selon l'une des revendications précédentes **caractérisé en ce que** l'instant d'émission $T_e$ dudit message est mesuré par ledit dispositif (101) et transmis dans le message à destination desdits satellites relais qui le transmettent à leur tour audits moyens de traitement (203), le nombre minimum N de signaux de radionavigation recherchés étant alors diminué de un lorsque le nombre $N_{vis}$ de satellites relais en visibilité dudit dispositif est strictement inférieur à $1+m$.

6. Procédé de géo-localisation selon l'une des revendications précédentes **caractérisé en ce qu'**il comporte en outre des mesures de la fréquence de réception dudit signal émis par ledit dispositif (101) à destination desdits satellites relais, la détermination de la position dudit dispositif (101) étant effectuée en outre à partir de ces mesures et de la fréquence d'émission dudit signal.

7. Procédé de géo-localisation selon l'une des revendications précédentes **caractérisé en ce que** les informations de position du dispositif (101) sont transmises avec le message vers les satellites relais puis vers lesdits moyens de traitement (203).

8. Procédé de géo-localisation selon l'une des revendications précédentes **caractérisé en ce que** les coordonnées de positionnement des satellites relais et/ou des satellites de radionavigation sont déterminées à partir des éphémérides de ces satellites.

9. Système pour la géo-localisation d'un dispositif (101) **caractérisé en ce qu'**il comporte un dispositif (101) apte à transmettre un message, une pluralité de satellites relais (102a,102b,102c,102d,102e) sur orbite terrestre moyenne (MEO) aptes à recevoir ledit message et à le diffuser et des moyens de traitement (203) aptes à déterminer la position dudit dispositif, ledit système étant adapté à mettre en œuvre le procédé selon l'une des revendications 1 à 8.

10. Système selon la revendication 9 **caractérisé en ce que** les satellites relais (102a,102b,102c,102d,102e) font partie de la constellation d'un système d'alerte et sauvetage SAR.

11. Système selon l'une des revendications 9 ou 10 **caractérisé en ce que** lesdits moyens de traitement (203) sont situés à distance desdits satellites relais ou sont embarqués dans lesdits satellites relais.

12. Système selon l'une des revendications 9 à 11 **caractérisé en ce que** lesdits satellites relais comportent en outre des moyens de transmission d'un signal de radionavigation.

13. Système selon l'une des revendications 9 à 12 **caractérisé en ce que** ledit dispositif est une radio-balise et ledit signal est un signal de détresse contenant un message d'alerte, les dits moyens de traitement (203) transmettant ledit message d'alerte à un centre de contrôle.

## Patentansprüche

1. Verfahren zum Geolokalisieren einer Vorrichtung (101), die ein wenigstens eine Meldung enthaltendes Signal zu mehreren Relais-Satelliten (102a, 102b, 102c, 102d, 102e) auf einer mittleren terrestrischen Umlaufbahn (MEO) in Sichtweite der Vorrichtung sendet, die die Meldung empfängt und sie zu Verarbeitungsmitteln (203) sendet, **dadurch gekennzeichnet, dass** es wenigstens die folgenden Schritte beinhaltet:

   ◦ Bestimmen der Empfangszeitpunkte $T_{Ri}$ der Meldung durch die Relais-Satelliten,
   ◦ Bestimmen der Pseudodistanzen $D_i$ zwischen der Vorrichtung (101) und den Relais-Satelliten durch Auflösen des Gleichungssystems $T_{Ri} = D_i/c + T_e$, wobei c die Ausbreitungsgeschwindigkeit des gesendeten Signals ist, $T_e$ der Sendezeitpunkt der Meldung durch die Vorrichtung (101) ist und i zwischen 1 und der Anzahl $N_{vis}$ von Relais-Satelliten in Sichtweite variiert, wobei $T_e$, oder alternativ die zeitliche Unsicherheit zwischen $T_e$ und den Empfangszeitpunkten $T_{Ri}$, unbekannt ist,
   o einen Schritt des Suchens und Erfassens, durch Empfangsmittel in der Vorrichtung (101), einer Anzahl N von Satellitenfunknavigationssignalen, wobei N wenigstens gleich $2+m \cdot N_{vis}$ ist, wobei m die Anzahl von räumlichen Koordinaten der Vorrichtung (101) ist und $N_{vis}$ die Anzahl von Relais-Satelliten in Sichtweite der Vorrichtung (101) ist,
   ◦ Bestimmen der zeitlichen Verschiebungen zwischen dem Senden der Funknavigationssignale und ihrem Empfang durch die Vorrichtung (101),
   ◦ Verteilen dieser zeitlichen Verschiebungen in der Nachricht durch die Vorrichtung (101),
   ◦ Bestimmen der Position der Vorrichtung (101) auf der Basis von wenigstens den Pseudodistanzen $D_i$, der Positionskoordinaten der Relais-Satelliten und durch ergänzende Auflösung der folgenden Gleichungen: $T_{Rj}(GNSS) = D_j(GNSS)/c + T_{ej}(GNSS)$, wobei $T_{Rj}(GNSS)$ der Empfangszeitpunkt, durch die Bake, des vom Satelliten GNSS j gesendeten Funknavigationssignals ist, $T_{ej}(GNSS)$ sein Sendezeitpunkt ist und $D_j(GNSS)$ die Pseudodistanz zwischen der Bake und dem Satelliten GNSS j ist.

2. Geolokalisierungsverfahren nach Anspruch 1, **dadurch gekennzeichnet, dass** die Relais-Satelliten (102a, 102b, 102c, 102d, 102e) Teil der Konstellation eines Warn- und Rettungssystems SAR sind.

3. Geolokalisierungsverfahren nach Anspruch 1 oder 2, **dadurch gekennzeichnet, dass** das Signal ein Notrufsignal ist, das eine Warnmeldung enthält.

4. Geolokalisierungsverfahren nach einem der vorherigen Ansprüche, **dadurch gekennzeichnet, dass** der Schritt des Suchens und Erfassens von Satellitenfunknavigationssignalen ausgelöst wird, wenn die Anzahl $N_{vis}$ von Relais-Satelliten in Sichtweite strikt kleiner als 1+m ist.

5. Geolokalisierungsverfahren nach einem der vorherigen Ansprüche, **dadurch gekennzeichnet, dass** der Sende-zeitpunkt $T_e$ der Meldung von der Vorrichtung (101) gemessen und in der Meldung zu den Relais-Satelliten gesendet wird, die sie wiederum zu den Verarbeitungsmitteln (203) senden, wobei die Mindestanzahl N von gesuchten Funknavigationssignalen dann um eins verringert wird, wenn die Anzahl $N_{vis}$ von Relais-Satelliten in Sichtweite der Vorrichtung strikt kleiner als 1+m ist.

6. Geolokalisierungsverfahren nach einem der vorherigen Ansprüche, **dadurch gekennzeichnet, dass** es ferner Messwerte für die Empfangsfrequenz des von der Vorrichtung (101) zu den Relais-Satelliten gesendeten Signals umfasst, wobei die Bestimmung der Position der Vorrichtung (101) ferner auf der Basis dieser Messungen und der Sendefrequenz des Signals erfolgt.

7. Geolokalisierungsverfahren nach einem der vorherigen Ansprüche, **dadurch gekennzeichnet, dass** die Informationen über die Position der Vorrichtung (101) mit der Meldung zu den Relais-Satelliten und dann zu den Verarbeitungsmitteln (203) gesendet wird.

8. Geolokalisierungsverfahren nach einem der vorherigen Ansprüche, **dadurch gekennzeichnet, dass** die Koordinaten der Position der Relais-Satelliten und/oder der Funknavigationssatelliten auf der Basis von Ephemeriden dieser Satelliten bestimmt werden.

9. System zum Geolokalisieren einer Vorrichtung (101), **dadurch gekennzeichnet, dass** es Folgendes umfasst: eine Vorrichtung (101), die eine Nachricht senden kann, mehrere Relais-Satelliten (102a, 102b, 102c, 102d, 102e) auf einer mittleren terrestrischen Umlaufbahn (MEO), die die Meldung empfangen und sie verteilen können und Verarbeitungsmittel (203) die die Position der Vorrichtung bestimmen können, wobei das System zum Durchführen des Verfahrens nach einem der Ansprüche 1 bis 8 bestimmt ist.

10. System nach Anspruch 9, **dadurch gekennzeichnet, dass** die Relais-Satelliten (102a, 102b, 102c, 102d, 102e) Teil der Konstellation eines Warn- und Rettungssystems SAR sind.

11. System nach Anspruch 9 oder 10, **dadurch gekennzeichnet, dass** sich die Verarbeitungsmittel (203) in einem Abstand von den Relais-Satelliten oder an Bord der Relais-Satelliten befinden.

12. System nach einem der Ansprüche 9 bis 11, **dadurch gekennzeichnet, dass** die Relais-Satelliten ferner Mittel zum Senden eines Funknavigationssignals umfassen.

13. System nach einem der Ansprüche 9 bis 12, **dadurch gekennzeichnet, dass** die Vorrichtung eine Funkbake ist und das Signal ein eine Warnmeldung enthaltendes Notrufsignal ist, wobei die Verarbeitungsmittel (203) die Warnmeldung zu einem Kontrollzentrum senden.

## Claims

1. Method for the geolocation of a device (101) transmitting a signal containing at least one message to a plurality of relay satellites (102a, 102b, 102c, 102d, 102e) in a medium earth orbit (MEO), visible from the said device, receiving the said message and transmitting it to processing means (203), said method comprising at least the following steps:

   ◦ determination of the times of reception $T_{Ri}$ of the said message by the said relay satellites,
   ◦ determination of the pseudo-distances $D_i$ between the said device (101) and the said relay satellites by solving the system of equations $T_{Ri} = D_i/c + T_e$, where c is the speed of propagation of the transmitted signal, $T_e$ is the time of transmission of the message by the device (101) and i varying from 1 to the number $N_{vis}$ of visible relay satellites, wherein $T_e$, or alternatively the timely uncertainty between $T_e$ and times of reception $T_{Ri}$, is unknown, o a step of searching for and acquiring, by reception means contained in the said device (101), a number N of satellite radio navigation signals, N being at least equal to $2+m-N_{vis}$ where m is the number of space coordinates of the said device (101) and $N_{vis}$ is the number of relay satellites visible from the device (101),
   ◦ determination of the time lags between the transmission of the radio navigation signals and their reception by the said device (101),

○ transmission by the said device (101) of these time lags in the said message,

○ determination of the position of the said device (101) from at least the said pseudo-distances $D_i$, from the positioning coordinates of the said relay satellites and by the additional solving of the following equations: $T_{Rj}(GNSS) = D_j(GNSS)/c + T_{ej}(GNSS)$, where $T_{Rj}(GNSS)$ is the time of reception, by the beacon, of the radio navigation signal transmitted by the GNSS satellite j, $T_{ej}(GNSS)$ is its time of transmission and $D_j(GNSS)$ is the pseudo-distance between the beacon and the GNSS satellite j.

2. Geolocation method according to Claim 1, wherein the relay satellites (102a, 102b, 102c, 102d, 102e) are part of the constellation of a search and rescue system (SAR).

3. Geolocation method according to one of Claims 1 or 2, wherein said signal is a distress signal containing an alerting message.

4. Geolocation method according to one of the preceding Claims, **characterized in that** the step of searching for and acquiring satellite radio navigation signals is initiated when the number $N_{vis}$ of visible relay satellites is strictly less than 1+m.

5. Geolocation method according to one of the preceding Claims, **characterized in that** the time of transmission $T_e$ of the said message is measured by the said device (101) and transmitted in the message to the said relay satellites which in their turn transmit it to the said processing means (203), the minimum number N of searched radio navigation signals then being reduced by one when the number $N_{vis}$ of relay satellites visible from the said device is strictly less than 1+m.

6. Geolocation method according to one of the preceding Claims, **characterized in that** it furthermore comprises measurements of the reception frequency of the said signal transmitted by the said device (101) to the said relay satellites, determination of the position of the said device (101) furthermore being carried out from these measurements and from the transmission frequency of the said signal.

7. Geolocation method according to one of the preceding Claims, **characterized in that** the position information of the device (101) is transmitted with the message to the relay satellites and then to the said processing means (203).

8. Geolocation method according to one of the preceding Claims, **characterized in that** the positioning coordinates of the relay satellites and/or of the radio navigation satellites are determined from the ephemeredes of these satellites.

9. System for the geolocation of a device (101), **characterized in that** it comprises a device (101) able to transmit a message, a plurality of relay satellites (102a, 102b, 102c, 102d, 102e) in a medium earth orbit (MEO) able to receive the said message and to broadcast it and processing means (203) able to determine the position of the said device, the said system being adapted to implement the method according to any one of Claims 1 to 8.

10. System according to Claim 9, **characterized in that** the relay satellites (102a, 102b, 102c, 102d, 102e) are part of the constellation of a search and rescue system (SAR).

11. System according to one of Claims 9 or 10, **characterized in that** said processing means (203) are located remotely from the said relay satellites or are installed in the said relay satellites.

12. System according to one of Claims 9 to 11, wherein said relay satellites furthermore comprise means of transmission of a radio navigation signal.

13. System according to one of Claims 9 to 12, wherein said device is a radio beacon and the said signal is a distress signal containing an alerting message, the said processing means (203) transmitting the said alerting message to a control centre.

FIG.1

FIG.2

EP 2 444 823 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **RICHARD PAIEMENT et al.** *Dilution of Précision Factor in Medium Earth Orbit Search and Rescue Systems*